(19) Europäisches Patentamt / European Patent Office / Office européen des brevets

(11) **EP 3 070 134 B1**

(12) **EUROPEAN PATENT SPECIFICATION**

(45) Date of publication and mention
of the grant of the patent:
**03.03.2021 Bulletin 2021/09**

(21) Application number: **15382124.4**

(22) Date of filing: **18.03.2015**

(51) Int Cl.:
*C09J 7/20* (2018.01)　　　*C09J 7/22* (2018.01)
*C09J 7/40* (2018.01)　　　*C08J 3/22* (2006.01)
*C08K 3/26* (2006.01)　　　*C08L 23/06* (2006.01)
*C08L 51/06* (2006.01)　　　*C09D 123/02* (2006.01)
*C08L 23/08* (2006.01)

(54) **PROTECTIVE FILMS, BLENDS, AND METHODS OF MAKING THEREOF**

SCHUTZFOLIEN, MISCHUNGEN UND VERFAHREN ZUR HERSTELLUNG DAVON

FILMS PROTECTEURS, MÉLANGES ET PROCÉDÉS DE FABRICATION DE CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.09.2016 Bulletin 2016/38**

(73) Proprietors:
• **Dow Global Technologies LLC**
  **Midland, MI 48674 (US)**
• **Rohm and Haas Company**
  **Philadelphia, PA 19106-2399 (US)**

(72) Inventors:
• **Nieto, Jesús**
  **43006 Tarragona (ES)**
• **Manrique, Antonio**
  **43006 Tarragona (ES)**
• **Uhl, Isabelle**
  **06905 Valbonne (FR)**
• **Muñoz, David**
  **43006 Tarragona (ES)**

(74) Representative: **Elzaburu S.L.P.**
  **Miguel Angel 21, 2nd floor**
  **28010 Madrid (ES)**

(56) References cited:
**WO-A1-98/38245**　　**WO-A1-2008/103887**
**WO-A2-2009/158036**　　**US-A- 5 066 542**

**Description**

**TECHNICAL FIELD**

Embodiments of the present disclosure generally relate to protective films, and more particularly, to blends suitable for use in multilayer protective films having improved unwinding without loss of adhesion to a surface.

**BACKGROUND**

Protective polymeric films or coatings have been used to protect a surface during finishing, packaging, and/or transport of an article from scratches, corrosion, or other defects. The films or coatings may be laminated to a variety of surfaces for protection, such as, metal, glass, plastic, paper, wood, etc. In these applications, the films should have high adhesion to the surfaces. The films can often be found in selfwound roll form in which an adhesive layer is in direct contact with the back side of the film. Thus, in roll form, the films tend to have high adhesion to itself, which can translate into very high unwinding forces during an unwinding operation. High unwinding forces can, in some instances, deform and/or damage the polymeric film. In automatic operations where higher unwind speeds may be used, the high unwind forces can more adversely affect the integrity of the polymeric film roll. Document WO2009/158036 discloses films for use in protecting surfaces which comprise at least one release layer and optionally an adhesion layer and/or an intermediate layer, the release layer having a plurality of three-dimensional protrusions that are either formed integral with the release layer or are discrete polymer beads applied to the release layer.
Accordingly, alternative multilayer protective films having reduced unwinding forces, while maintaining other critical properties of the protective films may be desired.

**SUMMARY**

Disclosed in embodiments herein are blends suitable for use in a release layer of a multilayer protective film. The blends comprise greater than 50 wt.% of an ethylene/alpha-olefin copolymer, a functionalized ethylene-based polymer grafted with ethylenically unsaturated carboxylic acids and acids derivatives, and from 3 to 20 wt.% of an inorganic filler.
Also disclosed in embodiments herein are multilayer films. The multilayer films comprise an adhesive layer, a release layer, and a core layer positioned between the adhesive layer and the release layer, wherein the release layer comprises a blend. The blend comprises greater than 50 wt.% of an ethylene/alpha-olefin copolymer, a functionalized ethylene-based polymer grafted with ethylenically unsaturated carboxylic acids and acids derivatives, and from 3 to 20 wt.% of an inorganic filler.
Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.
It is to be understood that both the foregoing and the following description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

**BRIEF DESCRIPTION OF THE DRAWINGS**

FIG. 1 graphically depicts the adhesion levels to various substrates for inventive multilayer protective films according to one or more embodiments shown and described herein as compared to comparative ethylene-based protective films.

FIG. 2 graphically depicts a comparison of unwinding forces for inventive multilayer protective films according to one or more embodiments shown and described herein as compared to comparative ethylene-based protective films.

**DETAILED DESCRIPTION**

Reference will now be made in detail to embodiments of multilayer protective films, blends suitable for use in multilayer protective films, and methods thereof, examples of which are further described in the accompanying figures. The protective films described herein may be used to protect various surfaces, such as, metal, glass, plastic, paper, wood, etc., of an article from scratches, corrosion, or other defects. It is noted, however, that this is merely an illustrative implementation of the embodiments disclosed herein. The embodiments are applicable to other technologies that are susceptible to similar problems as those discussed above. For example, the protective films may be used in shrink films or other flexible packaging applications, such as, heavy duty shipping sacks, liners, sacks, stand-up pouches, detergent pouches, sachets, etc., all of which are within the purview of the present embodiments.

Disclosed herein are blends suitable for use in a release layer of a multilayer protective film, and multilayer protective films. The multilayer protective films are polyethylene-based. The term "polyethylene-based" refers to films that contain more than 50 wt.% of a polyethylene resin, based on the total amount of polymer resin present in the film. In some embodiments, the multilayer films contain more than 50 wt.% of a polyethylene resin, based on the total amount of polymer resin present in the multilayer film. In other embodiments, the multilayer films may contain more than 50 wt.% of a polyethylene resin in each layer of a multilayer film, based on the total amount of polymer resin present in each layer of the multilayer film.

Blends

The blend may be configured to provide a poor adhesion surface for an adhesive layer present in a multilayer protective film. The blend generally comprises an ethylene/alpha-olefin copolymer, a functionalized ethylene-based polymer, and an inorganic filler.

*Ethylene/Alpha-Olefin Copolymer*

As used herein, "ethylene/alpha-olefin copolymer" refers to a polymer comprising repeating units derived from ethylene and one alpha-olefin comonomer. The blends described herein comprise greater than 50 wt.% of the ethylene/alpha-olefin copolymer. All individual values and subranges are included and disclosed herein. For example, in some embodiments, the blends comprise at least 55 wt.%, at least 60 wt.%, at least 65 wt.%, at least 70 wt.%, at least 75 wt.%, at least 80 wt.%, at least 85 wt.%, at least 90 wt.%, at least 95 wt.%, at least 97 wt.%, or at least 98 wt.% of the ethylene/alpha-olefin copolymer. In some embodiments, the blends may optionally further comprise one or more additional polyethylene resins, such as, for example, a low density polyethylene (LDPE) or other ethylene/alpha-olefin copolymers.

The ethylene/alpha-olefin copolymers comprise greater than 50 mol.%, for example, greater than or equal to 60 mol.%, greater than or equal to 70 mol.%, greater than or equal to 80 mol.%, or greater than or equal to 90 mol.% of the units derived from ethylene. The polyethylene resins also comprise less than 30 mol.%, for example, less than or equal to 25 mol.%, or less than or equal to 20 mol.%, less than or equal to 15 mol.%, or less than or equal to 10 mol.% of the units derived from one or more a-olefin comonomers. In some embodiments, the ethylene/alpha-olefin copolymer comprises greater than 50 mol.% of the units derived from ethylene and less than 30 mol.% of the units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282.

In embodiments herein, the alpha-olefin comonomers have no more than 20 carbon atoms. For example, in some embodiments, the alpha-olefin comonomers may have 3 to 10 carbon atoms, or 3 to 8 carbon atoms. Exemplary alpha-olefin comonomers include, but are not limited to, propylene, 1-butene, 1-pentene, 1-hexene, 1-heptene, 1-octene, 1-nonene, 1-decene, and 4-methyl- 1-pentene. In some embodiments, the one or more alpha-olefin comonomers may be selected from the group consisting of propylene, 1-butene, 1-hexene, and 1-octene. In other embodiments, the one or more alpha-olefin comonomers may be selected from the group consisting of 1-hexene and 1-octene.

The ethylene/alpha-olefin copolymer may be heterogeneously branched or homogeneously branched. Heterogeneously branched copolymers may be produced by Ziegler-Natta type catalysts, and contain a non-homogeneous distribution of comonomer among the molecules of the copolymer. Homogeneously branched copolymers may be produced, for example, by single-site catalyst systems, and contain a substantially homogeneous distribution of comonomer among the molecules of the copolymer.

In embodiments herein, the ethylene/alpha-olefin copolymer may have a density ranging from 0.920 to 0.965 g/cc. All individual values and subranges from 0.920 to 0.965 g/cc are included and disclosed herein. For example, the ethylene/alpha-olefin copolymer may have a lower limit of 0.925, 0.927, 0.930, 0.932, 0.935, 0.937, or 0.940 g/cc to an upper limit of 0.962, 0.960, 0.958, 0.955, 0.953, 0.950, 0.947, 0.945, 0.942, or 0.940 g/cc. In some embodiments, the ethylene/alpha-olefin copolymer has a density of 0.920 to 0.965 g/cc, 0.930 to 0.955 g/cc, or 0.930 to 0.945 g/cc. In further embodiments, the ethylene/alpha-olefin copolymer has a density of 0.920 to 0.950 g/cc, 0.925 to 0.945 g/cc, or 0.927 to 0.942 g/cc. Densities disclosed herein for ethylene-based polymers are determined according to ASTM D-792.

The ethylene/alpha-olefin copolymer may have a melt index ($I_2$) of 0.1-5.0 g/10 min (190°C and 2.16 kg). All individual values and subranges from 0.1 to 5.0 g/10 min are included and disclosed herein. For example, the ethylene/alpha-olefin copolymer may have a lower limit of 0.2, 0.3, 0.5, 0.7, 0.9, 1.0, 1.1, 1.3, 1.5, 1.7, 1.9, 2.0, 2.2, 2.4, or 2.5 g/10 min to an upper limit of 1.5, 1.7, 2.0, 2.5, 3.0, 3.2, 3.5, 3.7, 4.0, 4.2, or 4.5 g/10 min. In some embodiments, the ethylene/alpha-olefin copolymer has a melt index of 0.3-5.0 g/10 min (190°C and 2.16 kg). In other embodiments, the ethylene/alpha-olefin copolymer has a melt index of 0.5-3.5 g/10 min (190°C and 2.16 kg). In further embodiments, the ethylene/alpha-olefin copolymer has a melt index of 0.7-3.0 g/10 min (190°C and 2.16 kg). Melt index, or $I_2$, for ethylene-based polymers is determined according to ASTM D1238 at 190°C, 2.16 kg.

Examples of suitable ethylene/alpha-olefin copolymer resins may include, but are not limited to, DOWLEX™ resins available from The Dow Chemical Company (Midland, MI), such as DOWLEX™ 2108, DOWLEX™ 2740, DOWLEX™ 2042, DOWLEX™ 2045, ELITE™ resins available from The Dow Chemical Company, such as ELITE™ 5110, or EXCEED™ resins available from ExxonMobil Chemical Company, such as EXCEED™ 3527. Additional information, such as additional description and methods of making suitable ethylene/alpha-olefin copolymer resins, may be found in WO 94/25523, U.S. 5,677,383, U.S. 5,847,053, & U.S. 6,111,023.

Any conventional ethylene (co)polymerization reaction processes may be employed to produce the ethylene/alpha-olefin copolymer. Exemplary conventional ethylene (co)polymerization reaction processes include, but are not limited to, slurry phase polymerization process, solution phase polymerization process, and combinations thereof using one or more conventional reactors, e.g., loop reactors, stirred tank reactors, batch reactors in parallel, series, and/or any combinations thereof. Suitable methods for forming an ethylene/alpha-olefin copolymer may be found in U.S. Patent No. 4,547,475.

In some embodiments, the ethylene/alpha-olefin copolymer may be produced using a solution-phase polymerization process. Such a process may occur in a well-stirred reactor such as a loop reactor or a sphere reactor at temperature from about 150°C to about 300°C, or from about 180°C to about 200°C, and at pressures from about 30 to about 1000 psi (about 206 kPa to about 69 MPa), or from about 600 to about 850 psi (about 4.14 MPa to about 6.9 MPa). The residence time in such a process is from about 2 to about 20 minutes, or from about 3 to about 10 minutes. Ethylene, solvent, catalyst, and optionally one or more comonomers are fed continuously to the reactor. Exemplary catalysts in these embodiments include, but are not limited to, Ziegler-Natta catalysts. Exemplary solvents include, but are not limited to, isoparaffins. For example, such solvents are commercially available under the name ISOPAR E (ExxonMobil Chemical Co., Houston, Tex.). The resultant mixture of ethylene/alpha-olefin copolymer and solvent is then removed from the reactor and the polymer is isolated. Solvent is typically recovered via a solvent recovery unit, that is, heat exchangers and vapor liquid separator drum, and is recycled back into the polymerization system.

An exemplary multi-constituent catalyst system can include a Ziegler-Natta catalyst composition including a magnesium- and titanium-containing procatalyst and a cocatalyst. The procatalyst may, for example, comprise the reaction product of magnesium dichloride, an alkylaluminum dihalide, and a titanium alkoxide. The cocatalysts, which are reducing agents, may comprise aluminum compounds, but compounds of lithium, sodium and potassium, alkaline earth metals as well as compounds of other earth metals, other than aluminum, are possible. The compounds may be hydride, organometal or halide compounds. In some embodiments, the cocatalysts may be selected from the group comprising Al-trialkyls, Al-alkyl halides, Al-alkoxides and Al-alkoxy halides. In other embodiments, Al-Alkyls and Al-chlorides are used. In further embodiments, trimethyl aluminum, triethyl aluminum, tri-isobutyl aluminum, tri-n-hexyl aluminum, dimethyl aluminum chloride, diethyl aluminum chloride, ethyl aluminum dichloride and diisobutyl aluminum chloride, isobutylaluminum dichloride, may be used.

In some embodiments, the procatalyst may be a titanium-based Ziegler-Natta catalyst, such as, for example, a titanium supported $MgCl_2$ Ziegler-Natta catalyst characterized by a Ti:Mg ratio between 1.0:40 to 5.0:40, or a Ti:Mg ratio of 1.0:40 to 3.0:40, and the cocatalyst may be a triethylaluminum. In some embodiments, the Ti:Mg ratio may be 1.0:40. In other embodiments, the Ti:Mg ratio may be 3.0:40. The procatalyst and the cocatalyst components can be contacted either before entering the reactor or in the reactor. The Al:Ti molar ratio of cocatalyst component to procatalyst component can be from about 1:1 to about 15:1, about 1:1 to about 9:1 or about 1:1 to about 5:1. Trace amounts of impurities, for example, catalyst residues, may be incorporated into and/or within a polymer.

Other catalysts systems that may be used to form the ethylene/a-olefin interpolymer composition described herein include metallocene catalysts, constrained geometry catalysts ("CGC Catalyst"), such as those disclosed in U.S. Pat. No. 5,272,236, U.S. Pat. No. 5,278,272, U.S. Pat. No. 6,812,289, and WO 93/08221, as well as metallocene "bis-CP catalysts".

*Functionalized Ethylene-Based Polymer*

As used herein, the term "functionalized ethylene-based polymer" refers to an ethylene-based polymer that comprises at least one chemical group (chemical substituent), linked by a covalent bond, and which group comprises at least one heteroatom. The term "ethylene-based polymer" refers to a polymer that contains more than 50 mole percent polymerized ethylene monomer (based on the total amount of polymerizable monomers) and, optionally, may contain at least one comonomer. A heteroatom is defined as an atom which is not carbon or hydrogen. Common heteroatoms include, but are not limited to, oxygen, nitrogen, sulfur, or phosphorus.

In embodiments herein, the blend may comprise from 0.1 to 15 wt.% of the functionalized ethylene-based polymer. All individual values and subranges are included and disclosed herein. For example, in some embodiments, the blend may comprise from a lower limit of 0.1, 0.2, 0.3, 0.5, 0.7, 0.8, 1.0, 1.2, 1.5, 1.7, 1.9, 2.0, 2.5, 3.0, 3.5, 4.0, 4.5, 5.0, 5.5, 6.0, 6.5, 7.0, 7.5, 8.0, 8.5, 9.0, 9.5, or 10.0 wt.% to an upper limit of 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, or 15.0 wt.% of the functionalized ethylene-based polymer. In other embodiments, the blend may comprise from 1.0 to 15 wt.%, 1.0 to 12.0 wt.%, or 2.0 to 12.0 wt.% of the functionalized ethylene-based polymer. In further embodiments, the blend may comprise from 0.1 to 10 wt.%, 0.1 to 9.0 wt.%, 0.1 to 8.0 wt.%, 0.1 to 7.0 wt.%, 0.1 to 6.0 wt.%, 0.5 to 6.0 wt.%, 0.5 to 5.0 wt.%, or 1.0 to 5.0 wt.% of the functionalized ethylene-based polymer.

In embodiments herein, the functionalized ethylene-based polymer may be a functionalized ethylene-based homopolymer or a functionalized ethylene interpolymer. In some embodiments, the functionalized ethylene-based polymer is a functionalized ethylene homopolymer. In other embodiments, the functionalized ethylene-based polymer is a functionalized ethylene interpolymer. In further embodiments, the functionalized ethylene-based polymer is a functionalized ethylene/alpha-olefin interpolymer. In even further embodiments, the functionalized ethylene-based polymer is a functionalized ethylene/alpha-olefin copolymer. Suitable alpha-olefins may include C3-C8 alpha-olefins, and further, in some embodiments, the alpha-olefin may be propylene, 1-butene, 1-hexene, or 1-octene.

In embodiments herein, the ethylene-based polymer, which is the base polymer of the functionalized ethylene-based polymer, may be a homogeneously branched linear ethylene/a-olefin interpolymer, a homogeneously branched linear ethylene/a-olefin copolymer, a homogeneously branched substantially linear interpolymer, or a homogeneously branched substantially linear copolymer. Suitable alpha-olefins are as discussed herein. In some embodiments, the base polymer of the functionalized ethylene-based polymer may be a homogeneously branched substantially linear ethylene/alpha-olefin interpolymer or a homogeneously branched substantially linear ethylene/alpha-olefin copolymer. In other embodiments, the base polymer of the functionalized ethylene-based polymer is a homogeneously branched linear ethylene/alpha-olefin interpolymer or a homogeneously branched linear ethylene/alpha-olefin copolymer. The terms "homogeneous" and "homogeneously-branched" as used in reference to an ethylene/alpha-olefin interpolymer or copolymer refers to the alpha-olefin comonomer being randomly distributed within a given polymer molecule, and all of the polymer molecules have the same or substantially the same comonomer-to-ethylene ratio.

The homogeneously branched linear ethylene interpolymers are ethylene polymers, which lack long chain branching, but do have short chain branches, derived from the comonomer polymerized into the interpolymer, and which are homogeneously distributed, both within the same polymer chain, and between different polymer chains. These ethylene/a-olefin interpolymers have a linear polymer backbone, no measurable long chain branching, and a narrow molecular weight distribution. This class of polymers is disclosed, for example, by Elston in U.S. Patent No. 3,645,992, and subsequent processes to produce such polymers, for example, using bis-metallocene catalysts, have been developed, as shown, for example, in EP 0 129 368; EP 0 260 999; U.S. Patent No. 4,701,432; U.S. Patent No. 4,937,301; U.S. Patent No. 4,935,397; U.S. Patent No. 5,055,438; and WO 90/07526. As discussed, the homogeneously branched linear ethylene interpolymers lack (no measurable) long chain branching, just as is the case for the linear low density polyethylene polymers or linear high density polyethylene polymers. Commercial examples of homogeneously branched linear ethylene/a-olefin interpolymers include TAFMER™ polymers from the Mitsui Chemical Company, and EXACT™ polymers from ExxonMobil Chemical Company.

The substantially linear ethylene/a-olefin interpolymers have long chain branching. The long chain branches have the same comonomer distribution as the polymer backbone, and can have about the same length as the length of the polymer backbone. By "substantially linear," it is meant a polymer that is substituted, on average, with "0.01 long chain branches per 1000 carbons" to "3 long chain branches per 1000 carbons." In contrast to "substantially linear ethylene polymer," "linear ethylene polymer" means that the polymer lacks measurable or demonstrable long chain branches, that is, the polymer is substituted with an average of less than 0.01 long chain branch per 1000 carbons. The length of a long chain branch is longer than the carbon length of a short chain branch, formed from the incorporation of one comonomer into the polymer backbone. See, for example, U.S. Patent Nos. 5,272,236; 5,278,272. Commercial examples of substantially linear ethylene/a-olefin interpolymers include AFFINITY™ polymers from The Dow Chemical Company,

The substantially linear ethylene/a-olefin interpolymers form a unique class of homogeneously branched ethylene polymers. They differ substantially from the well-known class of conventional, homogeneously branched linear ethylene/a-olefin interpolymers, as discussed above, and, moreover, they are not in the same class as conventional heterogeneous "Ziegler-Natta catalyst polymerized" linear ethylene polymers (for example, ultra low density polyethylene (ULDPE), linear low density polyethylene (LLDPE) or high density polyethylene (HDPE), made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

Long chain branching can be determined by using 13C Nuclear Magnetic Resonance (NMR) spectroscopy, and can be quantified using the method of Randall (Rev. Macromol. Chem. Phys., C29 (2 &3), 1989, p. 285-297). Two other methods are Gel Permeation Chromatography, couple with a Low Angle Laser Light Scattering detector (GPCLALLS), and Gel Permeation Chromatography, coupled with a Differential Viscometer detector (GPC-DV). The use of these techniques for long chain branch detection, and the underlying theories, have been well documented in the literature. *See, for example,* Zimm, B.H. and Stockmayer, W.H., J. Chem. Phys., 17,1301(1949) and Rudin, A., Modern Methods of Polymer Characterization, John Wiley & Sons, New York (1991) pp. 103- 112.

Examples of suitable chemical groups that can be grafted onto the ethylene-based polymer include ethylenically unsaturated carboxylic acids and acid derivatives, such as esters, anhydrides, and acid salts. Examples include acrylic acid, methacrylic acid, maleic acid, fumaric acid, itaconic acid, citraconic acid, maleic anhydride, tetrahydrophthalic anhydride, norborn-5- ene-2,3-dicarboxylic acid anhydride, nadic anhydride, himic anhydride, and mixtures thereof. In some embodiments, at least one maleic anhydride group is grafted onto the ethylene-based polymer.

The functionalized ethylene-based polymer may have a composition, comprising at least one functionalized ethylene interpolymer, and wherein the functionalized ethylene interpolymer is formed from at least one unsaturated compound containing at least one heteroatom, and where the ethylene interpolymer that has a melt viscosity of less than 50,000 cP, or in the alternative, less than 40,000 cP, or in the alternative, less than 30,000 cP at 350°F (177°C), and a molecular weight distribution (Mw/Mn) from about 1 to 5, or in the alternative 1.1 to 5, or in the alternative from 1 to 4, or in the alternative from 1 to 3.5, or in the alternative from 1 to 3.5, or in the alternative from 1.1 to 3.5. In one embodiment, the ethylene interpolymer is an ethylene/alpha-olefin interpolymer. The melt viscosity may be measured according to ASTM D1084 at 177 °C (350°F).

The at least one unsaturated compound may be a carbonyl-containing compound. In some embodiments, the carbonyl-containing compound is selected from the group consisting of maleic anhydride, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, esters thereof, imides thereof, salts thereof, and Diels-Alder adducts thereof. In other embodiments, the unsaturated compound is an anhydride, such as, maleic anhydride.

In some embodiments, the functionalized ethylene interpolymer has a melt viscosity at 350°F (177°C) of less than 50,000 cP (1 cP = 1 mPa˙s), or in the alternative less than 40,000 cP, or in the alternative less than 30,000 cP, or in the alternative less than 20,000 cP. In one or more embodiments herein, the functionalized ethylene interpolymer has a melt viscosity at 350°F (177°C) greater than 2,000 cP, or in the alternative greater than 3,000 cP, or in the alternative greater than 4,000 cP. In one or more embodiments herein, the functionalized ethylene interpolymer is a functionalized ethylene/alpha-olefin interpolymer.

In other embodiments, the ethylene interpolymer, for example, an ethylene/alpha-olefin interpolymer, has a melt viscosity at 350°F (177°C) of less than 20,000 cP, and when functionalized, the functionalized ethylene interpolymer, for example, a functionalized ethylene/alpha-olefin interpolymer, has a melt viscosity at 350°F (177°C) of less than 25,000 cP. In further embodiments, both the ethylene interpolymer, for example, an ethylene/alpha-olefin interpolymer, and when functionalized, the functionalized ethylene interpolymer, for example, a functionalized ethylene/alpha-olefin interpolymer, each has, independently, a melt viscosity at 350°F (177°C) greater than 2,000 cP, or in the alternative greater than 3,000 cP, or in the alternative greater than 4,000 cP.

In further embodiments, the ethylene interpolymer, for example, an ethylene/alpha-olefin interpolymer, has a melt viscosity at 350°F (177°C) less than 15,000 cP, and when functionalized, the functionalized ethylene interpolymer, for example, a functionalized ethylene/alpha-olefin interpolymer, has a melt viscosity at 350°F (177°C) less than 20,000 cP. In a further embodiment, both the ethylene interpolymer, for example, an ethylene/alpha-olefin interpolymer, and when functionalized, the functionalized ethylene interpolymer, for example, a functionalized ethylene/alpha-olefin interpolymer, each has, independently, a melt viscosity at 350°F (177°C) greater than 2,000 cP, or in the alternative greater than 3,000 cP, or in the alternative greater than 4,000 cP.

The functionalized ethylene-based polymer is grafted with ethylenically unsaturated carboxylic acids and acid derivatives, such as esters, anhydrides, and acid salts at a level of from 0.05 to 6.0 weight percent, based on the weight of the functionalized ethylene-based polymer (or polyethylene). All individual values and subranges from 0.05 to 6.0 weight percent are included and disclosed herein. For example, in some embodiments, the graft level may range from a lower limit of 0.05, 0.07, 0.10, 0.30, 0.50, 0.60, 0.70, 0.75, 0.80, 0.90, 1.0, or 1.10 to an upper limit of 1.0, 1.10, 1.20, 1.50, 1.70, 1.90, 2.0, 2.50, 3.0, 3.50, 4.0, 4.50, 5.0, 5.50, or 6.0 weight percent, based on the weight of the functionalized ethylene-based polymer (or polyethylene). In other embodiments, the graft level may range from 0.10 to 2.0 weight percent, based on the weight of the functionalized ethylene-based polymer (or polyethylene). In further embodiments, the graft level may range from 0.30 to 1.90 weight percent, based on the weight of the functionalized ethylene-based polymer (or polyethylene). In even further embodiments, the graft level may range from 0.50 to 1.50 weight percent, based on the weight of the functionalized ethylene-based polymer (or polyethylene). In even further embodiments, the graft level may range from 0.75 to 1.50 weight percent, based on the weight of the functionalized ethylene-based polymer (or polyethylene).

In some embodiments, the functionalized ethylene-based polymer comprises MAH-grafted functionality, i.e., is a maleic anhydride grafted polyethylene. The MAH-graft level may be from 0.05 to 6.0 weight percent, based on the weight of the functionalized ethylene-based polymer (or polyethylene). All individual values and subranges from 0.05 to 6.0 weight percent are included and disclosed herein. For example, in some embodiments, the MAH-graft level may range from a lower limit of 0.05, 0.07, 0.10, 0.30, 0.50, 0.60, 0.70, 0.75, 0.80, 0.90, 1.0, or 1.10 to an upper limit of 1.0, 1.10, 1.20, 1.50, 1.70, 1.90, 2.0, 2.50, 3.0, 3.50, 4.0, 4.50, 5.0, 5.50, or 6.0 weight percent, based on the weight of the functionalized ethylene-based polymer (or polyethylene). In other embodiments, the MAH-graft level may range from 0.10 to 2.0 weight percent, based on the weight of the functionalized ethylene-based polymer (or polyethylene). In further embodiments, the MAH-graft level may range from 0.30 to 1.90 weight percent, based on the weight of the functionalized ethylene-based polymer (or polyethylene). In even further embodiments, the MAH-graft level may range from 0.50 to 1.50 weight percent, based on the weight of the functionalized ethylene-based polymer (or polyethylene). In even further embodiments, the MAH-graft level may range from 0.75 to 1.50 weight percent, based on the weight of the functionalized ethylene-based polymer (or polyethylene).

In embodiments herein, the blend may comprise from 0.1 to 15 wt.% of the maleic anhydride grafted polyethylene. All individual values and subranges are included and disclosed herein. For example, in some embodiments, the blend may comprise from a lower limit of 0.1, 0.2, 0.3, 0.5, 0.7, 0.8, 1.0, 1.2, 1.5, 1.7, 1.9, 2.0, 2.5, 3.0, 3.5, 4.0, 4.5, 5.0, 5.5, 6.0, 6.5, 7.0, 7.5, 8.0, 8.5, 9.0, 9.5, or 10.0 wt.% to an upper limit of 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, or 15.0 wt.% of the maleic anhydride grafted polyethylene. In other embodiments, the blend may comprise from 1.0 to 15 wt.%, 1.0 to 12.0 wt.%, or 2.0 to 12.0 wt.% of the maleic anhydride grafted polyethylene. In further embodiments, the blend may comprise from 0.1 to 10 wt.%, 0.1 to 9.0 wt.%, 0.1 to 8.0 wt.%, 0.1 to 7.0 wt.%, 0.1 to 6.0 wt.%, 0.5 to 6.0 wt.%, 0.5 to 5.0 wt.%, or 1.0 to 5.0 wt.% of the maleic anhydride grafted polyethylene.

In some embodiments, the functionalized ethylene-based polymer may have a density from 0.855 to 0.960 g/cc. All individual values and subranges from 0.855 to 0.960 g/cc are included and disclosed herein. For example, the functionalized ethylene-based polymer may have a density from a lower limit of 0.855, 0.860, 0.865, 0.875, 0.885, 0.890, 0.895, 0.900, 0.905, 0.910, 0.915 or 0.920 g/cc to an upper limit of 0.875, 0.880, 0.890, 0.900, 0.910, 0.920, 0.930, 0.940, 0.950, or 0.960 g/cc. In other embodiments, the functionalized ethylene-based polymer may have a density of from 0.855 to 0.900 g/cc, from 0.855 to 0.875 g/cc, from 0.875 to 0.900 g/cc, or from 0.865 to 0.885 g/cc. In further embodiments, the functionalized ethylene-based polymer may have a density of from 0.860 to 0.910 g/cc, from 0.865 to 0.895 g/cc, from 0.865 to 0.890 g/cc, or from 0.865 to 0.885 g/cc. The density is determined according to ASTM D-792.

In some embodiments, the maleic anhydride grafted polyethylene may have a density from 0.855 to 0.960 g/cc. All individual values and subranges from 0.855 to 0.960 g/cc are included and disclosed herein. For example, the maleic anhydride grafted polyethylene may have a density from a lower limit of 0.855, 0.860, 0.865, 0.875, 0.885, 0.890, 0.895, 0.900, 0.905, 0.910, 0.915 or 0.920 g/cc to an upper limit of 0.875, 0.880, 0.890, 0.900, 0.910, 0.920, 0.930, 0.940, 0.950, or 0.960 g/cc. In other embodiments, the maleic anhydride grafted polyethylene may have a density of from 0.855 to 0.900 g/cc, from 0.855 to 0.875 g/cc, from 0.875 to 0.900 g/cc, or from 0.865 to 0.885 g/cc. In further embodiments, the maleic anhydride grafted polyethylene may have a density of from 0.860 to 0.910 g/cc, from 0.865 to 0.895 g/cc, from 0.865 to 0.890 g/cc, or from 0.865 to 0.885 g/cc. The density is determined according to ASTM D-792.

In some embodiments, the functionalized ethylene-based polymer may have a melt index, 12, (at 2.16kg/190°C) from 0.1 g/10 min to 50 g/10 min, from 0.5 g/10 min to 20 g/10 min, from 1.0 g/10 min to 10 g/10 min, or from 1.0 g/10 min to 8.0 g/10 min. In other embodiments, the functionalized ethylene-based polymer may have a melt index, 12, (at 2.16kg/190°C) from 0.1 g/10 min to 20 g/10 min, from 0.5 g/10 min to 10 g/10 min, or from 1.0 g/10 min to 10 g/10 min. In further embodiments, the functionalized ethylene-based polymer may have a melt index, 12, (at 2.16kg/190°C) from 1.0 to 20 g/ 10 min, from 1.0 to 15 g/10 min, from 1.0 to 12 g/10 min, from 1.0 to 8 g/10 min, from 1.0 to 6 g/ 10 min, or from 1.0 to 5 g/10 min. In some embodiments, the functionalized ethylene-based polymer may have a melt index ratio, 121/12 from 1 to 10, from 1 to 8, from 1 to 5, or from 1 to 3. Melt index, or $I_2$, is determined according to ASTM D1238 at 190°C, 2.16 kg. Melt index, or $I_{21}$, is determined according to ASTM D1238 at 190°C, 21.6 kg.

In some embodiments, the maleic anhydride grafted polyethylene may have a melt index, 12, (at 2.16kg/190°C) from 0.1 g/10 min to 50 g/10 min, from 0.5 g/10 min to 20 g/10 min, from 1.0 g/10 min to 10 g/10 min, or from 1.0 g/10 min to 8.0 g/10 min. In other embodiments, the maleic anhydride grafted polyethylene may have a melt index, 12, (at 2.16kg/190°C) from 0.1 g/10 min to 20 g/10 min, from 0.5 g/10 min to 10 g/10 min, or from 1.0 g/10 min to 10 g/10 min. In further embodiments, the maleic anhydride grafted polyethylene may have a melt index, 12, (at 2.16kg/190°C) from 1.0 to 20 g/ 10 min, from 1.0 to 15 g/10 min, from 1.0 to 12 g/10 min, from 1.0 to 8 g/10 min, from 1.0 to 6 g/ 10 min, or from 1.0 to 5 g/10 min. In some embodiments, the maleic anhydride grafted polyethylene may have a melt index ratio, 121/12 from 1 to 10, from 1 to 8, from 1 to 5, or from 1 to 3. Melt index, or $I_2$, is determined according to ASTM D1238 at 190°C, 2.16 kg. Melt index, or $I_{21}$, is determined according to ASTM D1238 at 190°C, 21.6 kg.

In some embodiments, the functionalized ethylene-based polymer may have a molecular weight distribution (Mw/Mn) greater than, or equal to, 1.1, or greater than, or equal to, 1.2, or greater than, or equal to, 1.5, or greater than, or equal to, 1.7, as determined by GPC. In other embodiments, the functionalized ethylene-based polymer may have a molecular weight distribution (Mw/Mn) less than, or equal to, 4.0, or less than, or equal to, 3.5, or less than, or equal to, 2.5, or less than, or equal to, 2.1, as determined by GPC. In further embodiments, the functionalized ethylene-based polymer may have a molecular weight distribution (Mw/Mn) of from 1.5 to 3.5, from 1.5 to 3.0, from 1.8 to 3.0, from 2.0 to 3.0, from 2.0 to 2.8, or from 2.0 to 2.5, as determined by GPC.

In some embodiments, the maleic anhydride grafted polyethylene may have a molecular weight distribution (Mw/Mn) greater than, or equal to, 1.1, or greater than, or equal to, 1.2, or greater than, or equal to, 1.5, or greater than, or equal to, 1.7, as determined by GPC. In other embodiments, the maleic anhydride grafted polyethylene may have a molecular weight distribution (Mw/Mn) less than, or equal to, 4.0, or less than, or equal to, 3.5, or less than, or equal to, 2.5, or less than, or equal to, 2.1, as determined by GPC. In further embodiments, the maleic anhydride grafted polyethylene may have a molecular weight distribution (Mw/Mn) of from 1.5 to 3.5, from 1.5 to 3.0, from 1.8 to 3.0, from 2.0 to 3.0, from 2.0 to 2.8, or from 2.0 to 2.5, as determined by GPC.

Suitable commercial functionalized olefin-based polymers include AMPLIFY™ GR and TY Functional Polymers (for example, AMPLIFY™ TY 1052H) available from The Dow Chemical Company or RETAIN™ functional polymers (for example, RETAIN™ 3000) available from The Dow Chemical Company. Additional functionalized olefin-based polymers are described in U.S. Pub. 2005/718184. The functionalized ethylene-based polymer may comprise a combination of two or more embodiments as described herein.

*Inorganic Filler*

The blend comprises from 3 to 20 wt.% of an inorganic filler. All individual values and subranges are included and disclosed herein. For example, in some embodiments, the blend may comprise from a lower limit of 3%, 4%, 5%, 6%, 7%, 8%, 9%, 10%, 12%, 15% to an upper limit of 8%, 9%, 10%, 11%, 12%, 13%, 14%, 15%, 16%, 17%, 18%, 19%, or 20%, by weight of the blend. In other embodiments, the blend may comprise from 3 to 19 wt.%, from 3 to 18 wt.%, from 3 to 16 wt.%, from 3 to 15 wt.%, from 4 to 15 wt.%, or from 5 to 15 wt.% of an inorganic filler. In further embodiments, the blend may comprise from 5 to 20 wt.%, from 5 to 18 wt.%, from 5 to 16 wt.%, from 6 to 15 wt.%, from 7 to 15 wt.%, or from 7 to 12 wt.% of an inorganic filler.

Examples of suitable inorganic fillers that can be employed in preparing the blend may include talc, mica and additional members of the clay mineral family such as montmorillonite, hectorite, kaolinite, dickite, nacrite, halloysite, saponite, nontronite, beidellite, volhonskoite, sauconite, magadiite, medmontite, kenyaite, vermiculite, serpentines, chlorites, palygorskite, kulkeite, aliettite, sepiolite, allophane and imogolite. Naturally occurring members of the clay mineral family or synthetic members of the clay mineral family may be used.

Metal oxide, metal carbonate, or metal hydroxide materials can also be used as inorganic fillers. Such materials can include, for example, calcium oxide, magnesium oxide, zirconium oxide, titanium oxide, manganese oxide, iron oxide, aluminum oxide, calcium hydroxide, magnesium hydroxide, zirconium hydroxide, aluminum hydroxide, manganese hydroxide, iron hydroxide, calcium carbonate, magnesium carbonate, manganese carbonate, iron carbonate or zirconium carbonate.

Metal nitride, metal carbide, and metal boride materials such as aluminum nitride, silicon nitride, iron nitride, silicon carbide, manganese carbide, iron carbide, iron boride, aluminum boride, manganese boride or other materials used in the preparation of ceramic materials may also be used in preparing the blend. Aluminum oxide or aluminum hydroxide such as gibbsite, bayerite, nordstrandite, boehmite, diaspore and corundum may also be used as inorganic fillers. Mixtures of one or more of the foregoing materials may also be employed.

In some embodiments, the inorganic filler comprises calcium carbonate, talc, silica, mica, or kaolin, or combinations thereof. The average particle diameter of the inorganic filler is from 0.1 μm to 100 μm. All individual values and subranges are included and disclosed herein. For example, in some embodiments, the average particle diameter of the inorganic filler may be from 0.1 μm to 90 μm, from 0.1 μm to 85 μm, from 0.1 μm to 80 μm, from 0.1 μm to 75 μm, from 0.1 μm to 70 μm, from 0.1 μm to 65 μm, from 0.1 μm to 60 μm, from 0.1 μm to 55 μm, or from 0.1 μm to 50 μm. In other embodiments, the average particle diameter of the inorganic filler may be from 0.5 μm to 100 μm, from 0.5 μm to 90 μm, from 0.5 μm to 80 μm, from 1 μm to 75 μm, from 1 μm to 70 μm, from 1 μm to 65 μm, from 1 μm to 60 μm, from 1 μm to 55 μm, from 1 μm to 50 μm, or from 5 μm to 50 μm.

*Optional Additives*

The blend may further comprise one or more additives. Examples of suitable additives may include, but are not limited to, antioxidants, ultraviolet absorbers, antistatic agents, wetting agents, pigments, viscosity modifiers, anti-block agents, release agents, coefficient of friction (COF) modifiers, induction heating particles, odor modifiers/absorbents, and any combination thereof.

In some embodiments, the blend further comprises one or more additional polymers. Additional polymers include, but are not limited to, ethylene-based polymers and polypropylene as described below. Suitable ethylene-based polymers may include LDPE, LLDPE, MDPE, or HDPE, all of which are further described below. In embodiments herein, the blend may comprise an ethylene/alpha-olefin copolymer, and, optionally, the blend further comprises a low density polyethylene. In some embodiments, the blend may comprise an ethylene/alpha-olefin copolymer and a low density polyethylene. In other embodiments, the blend may comprise an ethylene/alpha-olefin copolymer having a density of 0.915 to 0.935 g/cc and/or a melt index, 12, of 0.1 to 5 g/10 min (190°C and 2.16 kg), and, optionally, the blend further comprises a low density polyethylene. In further embodiments, the blend may comprise an ethylene/alpha-olefin copolymer having a density of 0.915 to 0.935 g/cc and/or a melt index, 12, of 0.1 to 5 g/10 min (190°C and 2.16 kg), and a low density polyethylene. In even further embodiments, the blend may comprise ethylene/alpha-olefin copolymer having a density of 0.935 to 0.965 g/cc and/or a melt index, 12, of 0.1 to 5 g/10 min (190°C and 2.16 kg), and, optionally, the blend further comprises a low density polyethylene. In even further embodiments, the blend may comprise ethylene/alpha-olefin copolymer having a density of 0.935 to 0.965 g/cc and/or a melt index, 12, of 0.1 to 5 g/10 min (190°C and 2.16 kg), and a low density polyethylene.

## Multilayer Protective Films

Also disclosed in embodiments herein are multilayer protective films comprising an adhesive layer, a release layer, and a core layer positioned between the adhesive layer and the release layer. The thickness ratio of the two skin layers to the core layer can be any ratio suitable to maintain the optical and/or physical properties of the protective film. For example, in some embodiments, the thickness ratio of the adhesive layer and the release layer to the core layer may be 1:10 to 1:1, 1:5 to 1:1, or 1:4 to 1:1. The thickness ratio of the adhesive layer and the release layer to the core layer can also be captured by percentages. For example, in some embodiments, the core layer comprises from about 50 wt.% to about 95 wt.% of the overall film thickness. In other embodiments, the core layer comprises from about 60 wt.% to about 90 wt.% of the overall film thickness. In further embodiments, the core layer comprises from about 65 wt.% to about 85 wt.% of the overall film thickness. The adhesive layer and the release layer may have an equal thickness, or alternatively, may have an unequal thickness.

### Core Layer

The core layer may have a thickness of from 5 - 200 microns. All individual values and subranges of from 5 - 200 microns are included and disclosed herein. For example, the core layer may have a thickness of from a lower limit of 5, 10, 15, 20, or 25 microns to an upper limit of 150, 125, 100, 75, 50, 45, 40, 35, or 30 microns. In some embodiments, the core layer may have a thickness of from 5 - 150 microns. In other embodiments, the core layer may have a thickness of from 5 - 50 microns. In further embodiments, the core layer may have a thickness of from 5 - 35 microns.

The core layer may comprise low density polyethylene (LDPE), linear low density polyethylene (LLDPE), medium density polyethylene (MDPE), high density polyethylene (HDPE), polypropylene (PP), or combinations thereof. In some embodiments, the core layer comprises an MDPE. In some embodiments, the core layer comprises an HDPE. In other embodiments, the core layer comprises an LLDPE. In further embodiments, the core layer comprises PP. In even further embodiments, the core layer comprises a combination of two or more of LDPE, LLDPE, MDPE, HDPE, or PP.

"LDPE" may also be referred to as "high pressure ethylene polymer" or "highly branched polyethylene" and includes polymers that are partly or entirely homopolymerized or copolymerized in autoclave or tubular reactors at pressures above 14,500 psi (100 MPa) with the use of free-radical initiators, such as peroxides (see for example U.S. Pat. No. 4,599,392). The process results in a polymer architecture characterized by many long chain branches, including branching on branches. LDPE resins typically have a density in the range of 0.916 to 0.940 g/cm$^3$. Examples of LDPE resins include the ExxonMobil LD series resins, and the LDPE series of resins available from Dow Chemical.

"LLDPE" refers to both linear and substantially linear low density resins having a density in the range of from about 0.855 g/cm$^3$ to about 0.925 g/cm$^3$. "LLDPE" may be made using chromium, Ziegler-Natta, metallocene, constrained geometry, or single site catalysts. The term "LLDPE" includes znLLDPE, uLLDPE, and mLLDPE. "znLLDPE" refers to linear polyethylene made using Ziegler-Natta or chromium catalysts and typically has a density of from about 0.912 to about 0.925 and a molecular weight distribution greater than about 2.5, "uLLDPE" or "ultra linear low density polyethylene" refers to linear polyethylene made using chromium or Ziegler-Natta catalysts and typically having a density of less than 0.912 g/cm$^3$ and a molecular weight distribution ("MWD") greater than 2.5, and "mLLDPE" refers to LLDPE made using metallocene, constrained geometry, or single site catalysts and typically has a density in the range of from about 0.855 to 0.925 g/cm$^3$ and a molecular weight distribution ("MWD") in the range of from 1.5 to 8.0.

"MDPE" refers to linear polyethylene having a density in the range of from greater than 0.925 g/cm$^3$ to about 0.940 g/cm$^3$ and typically has a molecular weight distribution ("MWD") greater than 2.5. "MDPE" is typically made using chromium or Ziegler-Natta catalysts or using metallocene, constrained geometry, or single cite catalysts. "HDPE" refers to linear polyethylene having a density in the range greater than or equal to 0.940 g/cm$^3$ and typically has a molecular weight distribution ("MWD") greater than 2.5. "HDPE" is typically made using chromium or Ziegler-Natta catalysts or using metallocene, constrained geometry, or single cite catalysts.

"Polypropylene" refers to polymers comprising greater than 50%, by weight, of units derived from propylene monomer. This includes homopolymer polypropylene, random copolymer polypropylene, and impact copolymer polypropylene. These polypropylene materials are generally known in the art. "Polypropylene" also includes the relatively newer class of polymers known as propylene-based plastomers or elastomers ("PBE" of "PBPE"). These propylene/alpha-olefin copolymers are further described in details in the U.S. Pat. Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™.

*Adhesive Layer*

In embodiments herein, the adhesive layer may have a thickness of from 0.1 - 100 microns. All individual values and subranges of from 0.1 - 100 microns are included and disclosed herein. For example, the adhesive layer may have a thickness of from a lower limit of 0.1, 0.5, 1.0, 1.5, 2.0, 2.5, 3.0, 3.5, 4.0, 4.5, or 5.0 microns to an upper limit of 100, 75, 50, 40, 35, 30, 25, 20, 15, or 10 microns. In some embodiments, the adhesive layer may have a thickness of from 0.1 - 50 microns. In other embodiments, the adhesive layer may have a thickness of from 0.5 - 35 microns. In further embodiments, the adhesive layer may have a thickness of from 0.5 - 15 microns. It should be understood, however, that the thickness of the adhesive layer may vary depending upon the level of desired adhesiveness.

In some embodiments herein, the adhesive layer comprises a composition comprising an ethylene/a-olefin block copolymer, a tackifier, and optionally, an oil. As used herein, "composition" includes material(s) which comprise the composition, as well as reaction products and decomposition products formed from the materials of the composition. The composition may have a density of from 0.850 g/cc to 0.910 g/cc. All individual values and subranges of from 0.850 g/cc to 0.910 g/cc are included and disclosed herein. For example, in some embodiments, the composition may have a density of from 0.860 g/cc to 0.900 g/cc. In other embodiments, the composition may have a density of from 0.870 g/cc to 0.890 g/cc.

In embodiments herein, the composition may have a melt index ($I_2$) from 1 to 50 (190°C and 2.16 kg). All individual values and subranges of a melt index ($I_2$) from 1 to 50 (190°C and 2.16 kg) are included and disclosed herein. For example, in some embodiments, the melt index ($I_2$) may range from 1 to 40 g/10 min, from 1 to 30 g/10 min, or from 1 to 20 g/10 min. In other embodiments, the melt index ($I_2$) may range from 2 to 50 g/10 min, from 3 to 50 g/10 min, from 4 to 50 g/10 min, or from 5 to 50 g/10 min.

In embodiments herein, the compositions may have an $I_{10}/I_2$ ratio from 7.5 to 13. All individual values and subranges of an $I_{10}/I_2$ ratio from 7.5 to 13 are included and disclosed herein. For example, in some embodiments, the $I_{10}/I_2$ ratio may range from 7.6 to 13, or from 8.0 to 11. In other embodiments, the $I_{10}/I_2$ ratio may range from 7.7 to 13, from 8.0 to 12, or from 8.2 to 11.

In some embodiments, the composition has a melt index ($I_2$) from 1 to 50 (190°C and 2.16 kg) and an $I_{10}/I_2$ ratio from 7.5 to 13. All individual values and subranges of a melt index ($I_2$) from 1 to 50 (190°C and 2.16 kg) and an $I_{10}/I_2$ ratio from 7.5 to 13 are included and disclosed herein. For example, the composition may have a melt index ($I_2$) from 2-50, 3-50, 4-50, 5-50, 1-40, 1-30 or 1-20 g/10 min and an $I_{10}/I_2$ ratio from 7.6-13, 7.7-13, 8.0-12, 8.0-11, or 8.2-11.

In embodiments herein, the composition may have a glass transition temperature (Tg) from -70°C to -20°C, from -65°C to -30°C, or from -62°C to -40°C, as determined by DSC. In embodiments herein, the composition may have a melting temperature (Tm) from 110°C to 130°C, from 112°C to 125°C, or from 115°C to 122°C, as determined by DSC. In embodiments herein, the composition may have a crystallization temperature (Tc) from 100°C to 120°C, from 102°C to 118°C, or from 104°C to 115°C, as determined by DSC. In embodiments herein, the composition may have a delta heat of crystallization from 15 J/g to 35 J/g, from 16 J/g to 32 J/g, or from 17 J/g to 30 J/g, as determined by DSC.

In embodiments herein, the composition may have a storage modulus (G' at 25°C) from $0.4 \times 10^7$ to $3.0 \times 10^7$ dyne/cm$^2$, from $0.5 \times 10^7$ to $2.5 \times 10^7$ dyne/cm$^2$, or from $0.5 \times 10^7$ to $2.0 \times 10^7$ dyne/cm$^2$, as determined by DMA.

The ethylene/a-olefin block copolymer may be present in an amount greater than or equal to 50 weight percent, based on the weight of the composition. In some embodiments, the ethylene/a-olefin block copolymer may be present in an amount greater than or equal to 55 weight percent, or greater than or equal to 60 weight percent, based on the weight of the composition. In other embodiments, the ethylene/a-olefin block copolymer may be present in an amount from 50 to 95 weight percent, from 60 to 90 weight percent, from 65 to 85 weight percent, or from 70 to 85 weight percent, based on the weight of the composition.

The tackifier may be present in an amount less than or equal to 40 weight percent, based on the weight of the composition. In some embodiments, the tackifier may be present in an amount less than or equal to 35 weight percent. In other embodiments, the tackifier may be present in an amount from 5 to 30 weight percent, from 7 to 25 weight percent, or from 9 to 20 weight percent, based on the weight of the composition. In some embodiments, the amount of ethylene/a-olefin block copolymer, in the composition, is greater than the amount of tackifier, in the composition.

A. Ethylene/$\alpha$-Olefin Block Copolymer

As used herein, the terms "ethylene/$\alpha$-olefin block copolymer," "olefin block copolymer," or "OBC," mean an ethylene/a-olefin multi-block copolymer, and includes ethylene and one or more copolymerizable $\alpha$-olefin comonomer in polymerized form, characterized by multiple blocks or segments of two or more polymerized monomer units, differing in chemical or physical properties. The terms "interpolymer" and "copolymer" may be used interchangeably, herein, for the term ethylene/a-olefin block copolymer, and similar terms discussed in this paragraph. When referring to amounts of "ethylene" or "comonomer" in the copolymer, it is understood that this means polymerized units thereof. In some embodiments, the multi-block copolymer can be represented by the following formula:

$$(AB)_n,$$

where n is at least 1, or an integer greater than 1, such as 2, 3, 4, 5, 10, 15, 20, 30, 40, 50, 60, 70, 80, 90, 100, or higher; "A" represents a hard block or segment; and "B" represents a soft block or segment. In some embodiments, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows:

AAA-AA-BBB-BB.

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

Ethylene may comprise the majority mole fraction of the whole block copolymer, i.e., ethylene comprises at least 50 mole percent of the whole polymer. In some embodiments, ethylene comprises at least 60 mole percent, at least 70 mole percent, or at least 80 mole percent, with the substantial remainder of the whole polymer comprising at least one other comonomer that may be an $\alpha$-olefin having 3 or more carbon atoms. In some embodiments, the olefin block copolymer may comprise 50 mol.% to 90 mol.% ethylene, or 60 mol.% to 85 mol.%, or 65 mol.% to 80 mol.%. For many ethylene/octene block copolymers, the composition may comprise an ethylene content greater than 80 mole percent of the whole polymer and an octene content from 10 to 15, or from 15 to 20 mole percent of the whole polymer.

The olefin block copolymer includes various amounts of "hard" and "soft" segments. "Hard" segments are blocks of polymerized units, in which ethylene is present in an amount greater than 95 weight percent, or greater than 98 weight percent, based on the weight of the polymer, up to 100 weight percent. In other words, the comonomer content (content of monomers other than ethylene) in the hard segments is less than 5 weight percent, or less than 2 weight percent based on the weight of the polymer, and can be as low as zero. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent, based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent, and can be up to 100 weight percent.

The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/$\alpha$-Olefin Block Interpolymers," filed on March 15, 2006, in the name of Colin L. P. Shan, Lonnie Hazlitt, et al., and assigned to Dow Global Technologies Inc.. In particular, hard and soft segment weight percentages and comonomer content may be determined as described in Column 57 to Column 63 of U.S. 7,608,668.

The olefin block copolymer is a polymer comprising two or more chemically distinct regions or segments (referred to as "blocks") that may be joined in a linear manner, that is, a polymer comprising chemically differentiated units, which are joined end-to-end with respect to polymerized ethylenic functionality, rather than in pendent or grafted fashion. In an embodiment, the blocks differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

In some embodiments, the OBC is produced in a continuous process and may possess a polydispersity index, PDI (or MWD), from 1.7 to 3.5, or from 1.8 to 3, or from 1.8 to 2.5, or from 1.8 to 2.2. When produced in a batch or semi-batch process, the OBC may possess a PDI from 1.0 to 3.5, or from 1.3 to 3, or from 1.4 to 2.5, or from 1.4 to 2.

In addition, the olefin block copolymer possesses a PDI fitting a Schultz-Flory distribution rather than a Poisson distribution. The present OBC has both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem.Phvs. (1997) 107 (21), pp 9234-9238. In some embodiments, the present olefin block copolymer possesses a most probable distribution of block lengths.

In some embodiments, the olefin block copolymer is defined as having:

(A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2,$$

and/or

(B) Mw/Mn from 1.7 to 3.5, and is characterized by a heat of fusion, $\Delta H$ in J/g, and a delta quantity, $\Delta T$, in degrees Celsius, defined as the temperature difference between the tallest DSC peak and the tallest Crystallization Analysis Fractionation ("CRYSTAF") peak, wherein the numerical values of $\Delta T$ and $\Delta H$ have the following relationships:

$\Delta T > -0.1299 \Delta H + 62.81$ for $\Delta H$ greater than zero and up to 130 J/g

$\Delta T \geq 48°C$ for $\Delta H$ greater than 130 J/g

wherein the CRYSTAF peak is determined using at least 5 percent of the cumulative polymer, and if less than 5 percent of the polymer has an identifiable CRYSTAF peak, then the CRYSTAF temperature is 30°C; and/or

(C) elastic recovery, Re, in percent at 300 percent strain and 1 cycle measured with a compression-molded film of the ethylene/a-olefin interpolymer, and has a density, d, in grams/cubic centimeter, wherein the numerical values of Re and d satisfy the following relationship when ethylene/a-olefin interpolymer is substantially free of crosslinked phase:

$$Re > 1481 - 1629(d);$$

and/or

(D) has a molecular fraction which elutes between 40°C and 130°C when fractionated using TREF, characterized in that the fraction has a molar comonomer content greater than, or equal to, the quantity (- 0.2013) T + 20.07, or, in some embodiments, greater than or equal to the quantity (-0.2013) T+ 21.07, where T is the numerical value of the peak elution temperature of the TREF fraction, measured in °C; and/or,

(E) has a storage modulus at 25°C, G'(25°C), and a storage modulus at 100°C, G'(100°C), wherein the ratio of G'(25°C) to G'(100°C) is in the range of 1:1 to 9:1.

The olefin block copolymer may also have:

(F) a molecular fraction which elutes between 40°C and 130°C when fractionated using TREF, characterized in that the fraction has a block index of at least 0.5 and up to 1, and a molecular weight distribution, Mw/Mn, greater than 1.3; and/or

(G) an average block index greater than zero and up to 1.0 and a molecular weight distribution, Mw/Mn greater than 1.3. It is understood that the olefin block copolymer may have one, some, all, or any combination of properties (A)-(G). Block Index can be determined as described in detail in U.S. Patent No. 7,608,668. Analytical methods for determining properties (A) through (G) are disclosed in, for example, U.S. Patent No 7,608,668, Col. 31, line 26 through Col. 35, line 44.

Suitable monomers for use in preparing the present OBC include ethylene and one or more additional polymerizable monomers other than ethylene. Examples of suitable comonomers include straight-chain or branched $\alpha$-olefins of 3 to 30, or 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cycloolefins of 3 to 30, or 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di- and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

In some embodiments, the ethylene/a-olefin block copolymer has a density of from 0.850 g/cc to 0.900 g/cc, or from 0.855 g/cc to 0.890 g/cc or from 0.860 g/cc to 0.880 g/cc. In some embodiments, the ethylene/a-olefin block copolymer has a Shore A value of 40 to 70, from 45 to 65, or from 50 to 65. In some embodiments, the ethylene/a-olefin block copolymer has a melt index (MI or $I_2$) from 0.1 g/10 min to 50 g/10 min, or from 0.3 g/10 min to 30 g/10 min, or from 0.5 g/10 min to 20 g/10 min, as measured by ASTM D 1238 (190°C/2.16 kg). In some embodiments, the ethylene/a-olefin block copolymer comprises polymerized ethylene and one $\alpha$-olefin as the only monomer types. In other embodiments, the $\alpha$-olefin is selected from propylene, 1-butene, 1-hexene or 1-octene. In further embodiments, the ethylene/a-olefin block copolymer excludes styrene. In even further embodiments, the ethylene/a-olefin block copolymer is an ethylene/octene block copolymer.

The ethylene/a-olefin block copolymers can be produced via a chain shuttling process, such as described in U.S. Patent No. 7,858,706. In particular, suitable chain shuttling agents and related information are listed in Col. 16, line 39, through Col. 19, line 44. Suitable catalysts are described in Col. 19, line 45, through Col. 46, line 19, and suitable co-catalysts in Col. 46, line 20, through Col. 51 line 28. The process is described throughout the document, but particularly in Col. 51, line 29, through Col. 54, line 56. The process is also described, for example, in the following: U.S. Patent Nos. 7,608,668; 7,893,166; and 7,947,793.

In other embodiments, the ethylene/a-olefin block copolymer has at least one of the following properties A through E:

(A) Mw/Mn from 1.7 to 3.5, at least one melting point, Tm, in degrees Celsius, and a density, d, in grams/cubic centimeter, wherein the numerical values of Tm and d correspond to the relationship: $Tm > -2002.9 + 4538.5(d) - 2422.2(d)^2$, and/or

(B) Mw/Mn from 1.7 to 3.5, and is characterized by a heat of fusion, $\Delta H$ in J/g, and a delta quantity, $\Delta T$, in degrees Celsius defined as the temperature difference between the tallest DSC peak and the tallest Crystallization Analysis Fractionation ("CRYSTAF") peak, wherein the numerical values of $\Delta T$ and $\Delta H$ have the following relationships:

$\Delta T > -0.1299 \Delta H + 62.81$ for $\Delta H$ greater than zero and up to 130 J/g

$\Delta T \geq 48°C$ for $\Delta H$ greater than 130 J/g

wherein the CRYSTAF peak is determined using at least 5 percent of the cumulative polymer, and if less than 5 percent of the polymer has an identifiable CRYSTAF peak, then the CRYSTAF temperature is 30°C; and/or

(C) elastic recovery, Re, in percent at 300 percent strain and 1 cycle measured with a compression-molded film of the ethylene/a-olefin interpolymer, and has a density, d, in grams/cubic centimeter, wherein the numerical values of Re and d satisfy the following relationship when ethylene/a-olefin interpolymer is substantially free of crosslinked phase:

$$Re > 1481 - 1629(d);$$

and/or

(D) has a molecular fraction which elutes between 40°C and 130°C when fractionated using TREF, characterized in that the fraction has a molar comonomer content greater than, or equal to, the quantity (- 0.2013) T + 20.07, or greater than or equal to the quantity (-0.2013) T+ 21.07, where T is the numerical value of the peak elution temperature of the TREF fraction, measured in °C; and/or,

(E) has a storage modulus at 25°C, G'(25°C), and a storage modulus at 100°C, G'(100°C), wherein the ratio of G'(25°C) to G'(100°C) is in the range of 1:1 to 9:1.

It should be understood herein that the ethylene/a-olefin block copolymer may comprise a combination or two or more embodiments described herein.

B. Tackifier

In embodiments herein, the tackifier is a resin that is used to reduce modulus and improve surface adhesion. In some embodiments, the tackifier may be a non-hydrogenated aliphatic $C_5$ (five carbon atoms) resin, a hydrogenated aliphatic $C_5$ resin, an aromatic-modified $C_5$ resin, a terpene resin, a hydrogenated $C_9$ resin, or combinations thereof. The $C_5$ resin may be obtained from $C_5$ feedstocks, such as, pentenes and piperylene. The terpene resin may be based on pinene and d-limonene feedstocks. The hydrogenated resin may be based on aromatic resins, such as, $C_9$ feedstocks, rosins, aliphatic or terpene feedstocks. Nonlimiting examples of suitable tackifier include tackifiers sold under the tradename PICCOTAC™, REGALITE™, REGALREZ™, and PICCOLYTE™. Specific examples of suitable tackifiers include PICCOTAC™ 1100, REGALITE™ R1090, REGALREZ™ 1094, which are available from The Eastman Chemical Company, and PICCOLYTE™ F-105 available from Pinova, Inc. In some embodiments, the tackifier may comprise a combination or two or more tackifiers described herein.

In some embodiments, the tackifier is selected from the group consisting of a non-hydrogenated aliphatic $C_5$ resin, a hydrogenated aliphatic $C_5$ resin, an aromatic modified $C_5$ resin, a terpene resin, a non-hydrogenated $C_9$ resin, a hydrogenated $C_9$ resin, and combinations thereof. In other embodiments, the tackifier is selected from the group consisting of a non-hydrogenated aliphatic $C_5$ resin, a hydrogenated aliphatic $C_5$ resin, a non-hydrogenated $C_9$ resin, a hydrogenated $C_9$ resin, and combinations thereof.

In some embodiments, the tackifier may have a density ranging from 0.92 g/cc to 1.06 g/cc. Of course, all individual values and subranges of from 0.92 g/cc to 1.06 g/cc are included and disclosed herein.

In some embodiments, the tackifier may have a Ring and Ball softening temperature (measured in accordance with ASTM E 28) from 80°C to 140°C, or from 85°C to 130°C or from 90°C to 120°C, or from 90°C to 100°C. In other embodiments, the tackifier may have a Ring and Ball softening temperature (measured in accordance with ASTM E 28) from 85°C to 135°C, from 90°C to 130°C, or from 90°C to 125°C. In further embodiments, the tackifier may have a Ring and Ball softening temperature (measured in accordance with ASTM E 28) from 80°C to 120°C, from 85°C to 115°C, or from 90°C to 110°C.

In some embodiments, the tackifier has a melt viscosity of less than 1000 Pascal second (Pa•s) at 175°C. All individual values and subranges of less than 1000 Pascal second (Pa•s) at 175°C are included and disclosed herein. For example, in some embodiments, the tackifier has a melt viscosity of less than 500 Pa•s at 175°C, less than 200 Pa•s at 175°C, less than 100 Pa•s at 175°C, or less than 50 Pa•s at 175°C. In other embodiments, the tackifier has a melt viscosity greater than, or equal to, 1 Pascal second (Pa•s) at 175°C, or greater than, or equal to, 5 Pascal second (Pa•s) at 175°C. In further embodiments, the tackifier has a melt viscosity from 1 Pa•s to less than 100 Pa•s, or from 1 Pa•s to less than 50 Pa•s at 175°C.

C. Oil

The composition may further comprise an oil. In some embodiments, the oil contains greater than 95 mol.% aliphatic carbons. In some embodiments, the glass transition temperature for the amorphous portion of the oil is below -70°C. The oil can be a mineral oil. Nonlimiting examples of suitable oils may include mineral oils sold under the tradenames HYDROBRITE™ 550 (Sonneborn), PARALUX™ 6001 (Chevron), KAYDOL™ (Sonneborn), BRITOL™ 50T (Sonneborn), CLARION™ 200 (Citgo), and CLARION™ 500 (Citgo). The oil may comprise a combination or two or more embodiments described herein. The oil may be present in an amount from 2 to 25 weight percent, from 4 to 20 weight percent, or from 6 to 15 weight percent, based on the weight of the composition.

D. Additives

The composition may further comprise one or more additives. Examples of suitable additives may include, but are not limited to, antioxidants, ultraviolet absorbers, antistatic agents, wetting agents, pigments, viscosity modifiers, anti-block agents, release agents, fillers, coefficient of friction (COF) modifiers, induction heating particles, odor modifiers/absorbents, and any combination thereof. In some embodiments, the composition further comprises one or more additional polymers. Additional polymers include, but are not limited to, ethylene-based polymers and propylene-based polymers.

In other embodiments herein, the adhesive layer comprises a pressure sensitive adhesive. As used herein, a "pressure sensitive adhesive" includes materials having a Tg below -20°C and a shear elastic modulus (G') at 25°C between $10^5$-$10^7$ dynes/cm determined at 5% strain, 6.3 rad/sec. Tg, which is the glass transition temperature, may be determined using Differential Scanning Calorimetry (DSC) in accordance with ASTM E-1356 using the midpoint as the glass transition temperature and a heating rate of 10°C/min. Shear elastic modulus (G') may be determined using Dynamic Mechanical Analysis (DMA).

In some embodiments, the pressure sensitive adhesive may be an acrylic polymer. As used herein, "acrylic polymer" refers to polymers having greater than 50% of the polymerized units derived from acrylic monomers. The acrylic polymers may be crosslinked. Acrylic resins and emulsions containing acrylic resins are generally known in the art, and reference may be had to The Kirk-Othmer, Encyclopedia of Chemical Technology, Volume 1, John Wiley & Sons, Pages 314-343, (1991), ISBN 0-471-52669-X (v. 1). In other embodiments, the pressure sensitive adhesive may comprise an acrylic polymer suspended in one or more carriers. The pressure sensitive adhesive may contain 25-90 percent of one or more carriers based on the total weight of the pressure sensitive adhesive, in order to deliver the acrylic resin through a coating method. The carriers may include but are not limited to water or solvents, such as, ethyl acetate, toluene, and methyl ethyl ketone.

The pressure sensitive adhesive may further comprise an additive. Suitable additives may include rheology modifiers (0 to 3%), wetting agents (0 to 2%), defoamers (0 to 1%), tackifiers (0-50%), plasticizers (0-20%), and fillers (0 to 40%). Tackifiers that are particularly useful include dispersed hydrocarbons and resins (for example, TACOLYN™ 3100, available from the Eastman Chemical Company, Kingsport TN).

*Release Layer*

The release layer described herein may be configured to provide a poor adhesion surface for the adhesive layer. In embodiments herein, the release layer may have a thickness of from 0.1 - 100 microns. All individual values and subranges of from 0.1 - 100 microns are included and disclosed herein. For example, the release layer may have a thickness of from a lower limit of 0.1, 0.5, 1.0, 1.5, 2.0, 2.5, 3.0, 3.5, 4.0, 4.5, or 5.0 microns to an upper limit of 100, 75, 50, 40, 35, 30, 25, 20, 15, or 10 microns. In some embodiments, the release layer may have a thickness of from 0.1 - 50 microns. In other embodiments, the release layer may have a thickness of from 0.5 - 35 microns. In further embodiments, the release layer may have a thickness of from 0.5 - 15 microns.

In embodiments herein, the release layer may be formed from the blends described in one or more embodiments herein.

*Multilayer Films*

In embodiments herein, the multilayer protective films described herein may exhibit low unwinding force and low noise, in combination with high adhesion. Without being bound by theory, it is believed that these features result due to the surface roughness provided by the filler, which in fact decreases the surface of contact between the two consecutive layers of film in the roll; at the same time, the functionalized polymer improves the dispersion of the filler, reducing the amount of agglomerates, and therefore leading to a finer roughness which decreases the unwinding force but does not deform the adhesive layer in contact with it in the roll, therefore preserving its adhesion when applied on the surface to be protected.

One or more layers of the multilayer protective films described herein may further comprise additional components, such as, one or more other polymers and/or one or more additives. Example polymer additives have been described in Zweifel Hans et al., "Plastics Additives Handbook," Hanser Gardner Publications, Cincinnati, Ohio, 5th edition (2001), which is incorporated herein by reference in its entirety. Such additives include, but are not limited to, antistatic agents, color enhancers, dyes, lubricants, fillers, pigments, primary antioxidants, secondary antioxidants, processing aids, UV stabilizers, anti-blocks, slip agents, tackifiers, fire retardants, anti-microbial agents, odor reducer agents, anti-fungal agents, and combinations thereof. The total amount of the additives present in a layer of the ethylene-based shrink films and/or the multilayer ethylene-based shrink films may range from about 0.1 combined wt.% to about 10 combined wt.%, by weight of a layer.

The multilayer protective films described herein may be manufactured by blown film or cast film extrusion processes, using multilayer technology. Film manufacturing processes are also described in U.S. Pat. Nos. 3,456,044 (Pahlke), U.S. Pat. No. 4,352,849 (Mueller), U.S. Pat. Nos. 4,820,557 and 4,837,084 (both to Warren), U.S. Pat. No. 4,865,902 (Golike et al.), U.S. Pat. No. 4,927,708 (Herran et al.), U.S. Pat. No. 4,952,451 (Mueller), and U.S. Pat. Nos. 4,963,419, and 5,059,481 (both to Lustig et al.), the disclosures of which are incorporated herein by reference.

**Test Methods**

Unless otherwise stated, the following test methods are used. All test methods are current as of the filing date of this disclosure.

Density

Samples for density measurement are prepared according to ASTM D1928. Measurements are made using ASTM D792, Method B.

Melt Index

Melt index, or $I_2$, is determined according to ASTM D1238 at 190°C, 2.16 kg. Melt index, or $I_{10}$, is measured in accordance with ASTM D1238 at 190°C, 10 kg. Melt index, or $I_{21}$, is determined according to ASTM D1238 at 190°C, 21.6 kg.

GPC Method

The gel permeation chromatographic system consists of either a Polymer Laboratories Model PL-210 or a Polymer Laboratories Model PL-220 instrument. The column and carousel compartments are operated at 140°C. Three Polymer Laboratories 10-micron Mixed-B columns are used. The solvent is 1,2,4-trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160° C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C. with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.4316 \times (M_{polystyrene})$. Polyethylene equivalent molecular weight calculations are performed using Viscotek TriSEC software Version 3.0.

Number-, weight- and z-average molecular weights were calculated according to the following equations:

$$M_n = \frac{\sum^{i} Wf_i}{\sum^{i} \left( Wf_i \Big/ M_i \right)}$$

$$M_w = \frac{\sum^{i}\left(Wf_i * M_i\right)}{\sum^{i} Wf_i}$$

$$M_z = \frac{\sum^{i}\left(Wf_i * M_i^2\right)}{\sum^{i} Wf_i * M_i}$$

wherein Mn is the number average molecular weight, Mw, is the weight average molecular weight, Mz is the z-average molecular weight, $Wf_i$ is the weight fraction of the molecules with a molecular weight of $M_i$.

Dynamic Mechanical Analysis (DMA)

For the polyolefin based pressure sensitive adhesives, Dynamic Mechanical Analysis (DMA) is measured on compression molded disks formed in a hot press at 180°C at 10 MPa pressure for five minutes, and then water cooled in the press at 90°C/min. Testing is conducted using an ARES controlled strain rheometer (TA instruments) equipped with dual cantilever fixtures for torsion testing.

For aqueous-based pressure sensitive adhesives, the liquid sample is air dried for 2 weeks in a Teflon™ dish and then dried in a vacuum oven at room temperature overnight. The plaque is then removed from the tray and is 1.5 mm in thickness.

For the polyolefin sample, a "1.5 mm plaque" is pressed, and for either system the plaque is cut in a bar of dimensions 32 mm x 12 mm (test sample). The test sample is clamped at both ends between fixtures separated by 10 mm (grip separation ΔL), and subjected to successive temperature steps from -100°C to 200°C (5°C per step). At each temperature, the shear elastic modulus, G', is measured at an angular frequency of 6.3 rad/s, the strain amplitude being maintained between 0.1 percent and 4 percent, to ensure that the torque is sufficient and that the measurement remains in the linear regime.

An initial static force of 10 g is maintained (auto-tension mode) to prevent slack in the sample when thermal expansion occurred. As a consequence, the grip separation ΔL increases with the temperature, particularly above the melting or softening point of the polymer sample. The test stops at the maximum temperature or when the gap between the fixtures reaches 65 mm. The storage modulus is taken at 25°C.

180° Peel Adhesion

180° peel adhesion to various substrates is measured in accordance with AFERA 5001 (ISO 29862 - EN 1939), Method A, 2008 edition.

Unwinding Force at High Speed

Unwinding force of adhesive tapes at high speed is measured in accordance with AFERA 4008 (EN 12026), 2008 Edition. The unwinding force is provided in g/50 mm.

Unwinding Force at 3 m/min

The unwinding force equipment used includes a roll holder, and a take-off roller which also re-winds the film. Two load cells measure the tension required to unwind the film at a given speed. A minimum of 48 hours is allowed between film production and unwinding force testing. The measurement system consists of a roll holder with two load cells with a 25kg force range. The unwinding force value is taken from a load cell display, in grams.

A roll of film with 180 mm width, made according to the "Preparation of Films" procedure described in the Examples section below, is placed in a roll holder. The holder uses bearings to reduce the friction to less than about 2 grams. Then the film sample is passed by several tension rolls and reaches the winder in order to be re-wound onto a winder roll.

When the film is in already threaded through the winding system, the take-off roller is started in order to pull the film, while the winder collects the film again, adjusting the speed according to the test. The values of force from the display (in grams) are manually taken every 30 seconds, for a total time of 5 minutes. The unwinding force is provided in g/180 mm as an average of all measurements.

Noise On Unwinding

Noise is qualitatively estimated by an operator by unwinding a piece of film tape by hand, and assigning a descriptor from the list of low, medium, high or impossible (meaning that the film cannot be unwound without deformation).

Melt Viscosity

Melt viscosity is measured according to ASTM D1084 at 350°F.

**Examples**

The embodiments described herein may be further illustrated by the following non-limiting examples.
Three layer cast films were made as outlined below. The films were produced on a cast line using a Dr Collin GmbH small-scale extruder equipped with a flat die and a chill roll film cooling device. Three extruders were used and each extruder had a chill roll temperature of 18°C, a die temp of 230°C, a die size of 300 mm, a die gap of 0.8 mm, an air gap of 14 mm, and a max layflat width of 260 mm. The total line speed was 11 m/min. The films produced had a thickness of 40 micrometers. The core layer comprises 70% of the overall film thickness. The release layer and the adhesive layer each comprise 15% of the overall film thickness. Additional film process features are outlined below in Table 1.

Preparation of Films

Table 1

|  | Extruder A Adhesive Layer | Extruder B Core Layer | Extruder C Release Layer |
|---|---|---|---|
| Screw diameter | 25 mm | 30 mm | 25 mm |
| Screw Speed | 21 rpm | 55 rpm | 21 rpm |
| Extruder Zone 1 | 100°C | 180°C | 180°C |
| Extruder Zone 2 | 140°C | 215°C | 215°C |
| Extruder Zone 3 | 185°C | 220°C | 220°C |
| Extruder Zone 4 | 200°C | 230°C | 230°C |

A list of the resins used in the inventive and comparative examples is provided in Table 2.

Table 2

| Name | Density (g/cc) | Melt Index (g/10min) | Description |
|---|---|---|---|
| DOWLEX™ SC 2108G, available from The Dow Chemical Company (Midland, MI USA). | 0.935 | 2.6 | Ethylene/1-octene copolymer made via a solution process. |
| DOWLEX™ 2107GC, available from The Dow Chemical Company (Midland, MI USA). | 0.917 | 2.3 | Ethylene/1-octene copolymer made via a solution process. |
| INFUSE™ 9107, available from The Dow Chemical Company (Midland, MI USA). | 0.866 | 1.0 | ethylene/1-octene olefin block copolymer made via a solution process |

(continued)

| Name | Density (g/cc) | Melt Index (g/10min) | Description |
|---|---|---|---|
| PICCOTAC™ 1090, available from The Eastman Chemical Company (Kingsport TN, USA). | Not Applicable | Not Applicable | Aliphatic, low molecular weight C5 resin |
| RETAIN™ 3000, available from The Dow Chemical Company (Midland, MI USA). | 0.870 | Not Applicable. | Functionalized ethylene-based polymer having a maleic anhydride graft level of 0.8 - 1.4 wt.%. The melt viscosity is 13000 cP at 350°F |
| AFFINITY™ GA 1950, available from The Dow Chemical Company (Midland, MI USA). | 0.874 | Not Applicable. | Ethylene/1-Octene plastomer made via a solution Process. The melt viscosity is 17,000 cP at 350°F |
| AMPLIFY™ TY 1052H, available from The Dow Chemical Company (Midland, MI USA). | 0.875 | 1.3 | Functionalized ethylene-based polymer having a maleic anhydride graft level of 0.8 to 1.0 wt.% |
| GRANIC® 422, available from GCR Group, (Tarragona, Spain) | -- | -- | A blend of 20% linear low density polyethylene and 80% calcium carbonate particles having an average particle diameter of 1.7 microns. |

Table 4 - Film Structures

| | Adhesive layer (15 wt.%) | Core Layer (70 wt.%) | Release layer (15 wt.%) |
|---|---|---|---|
| Comparative Example 1 | 88 wt.% INFUSE™ 9107, and 12 wt.% PICCOTAC™ 1090 | DOWLEX™ 2107GC | 90 wt.% DOWLEX™ SC 2108G, and 10 wt.% GRANIC® 422 |
| Comparative Example 2 | 88 wt.% INFUSE™ 9107, and 12 wt.% PICCOTAC™ 1090 | DOWLEX™ 2107GC | 90 wt.% DOWLEX™ SC 2108G, and 10 wt.% RETAIN™ 3000 |
| Comparative Example 3 | 88 wt.% INFUSE™ 9107, and 12 wt.% PICCOTAC™ 1090 | DOWLEX™ 2107GC | 85% DOWLEX™ SC 2108G, 10% GRANIC® 422, and 5% AFFINITY™ GA 1950 |
| Inventive Example 1 | 88 wt.% INFUSE™ 9107, and 12 wt.% PICCOTAC™ 1090 | DOWLEX™ 2107GC | 87% DOWLEX™ SC 2108G, 10% GRANIC® 422, and 3% RETAIN™ 3000 |
| Inventive Example 2 | 88 wt.% INFUSE™ 9107, and 12 wt.% PICCOTAC™ 1090 | DOWLEX™ 2107GC | 80% DOWLEX™ SC 2108G, 10% GRANIC® 422, and 10% RETAIN™ 3000 |
| Inventive Example 3 | 88 wt.% INFUSE™ 9107, and 12 wt.% PICCOTAC™ 1090 | DOWLEX™ 2107GC | 87% DOWLEX™ SC 2108G, 10% GRANIC® 422, and 3% AMPLIFY™ TY 1052H |
| Inventive Example 4 | 88 wt.% INFUSE™ 9107, and 12 wt.% PICCOTAC™ 1090 | DOWLEX™ 2107GC | 80% DOWLEX™ SC 2108G, 10% GRANIC® 422, and 10% AMPLIFY™ TY 1052H |

Various properties of the films were measured and are listed below in Tables 5 and 6.

Table 5 - Inventive Film Properties

| | IE1 | IE2 | IE3 | IE4 |
|---|---|---|---|---|
| 180° Peel Adhesion after 24 h (g/25 mm) -- Stainless Steel | 242 | 279 | 259 | 221 |
| 180° Peel Adhesion after 24 h (g/25 mm) -- Glass Plates | 237 | 267 | 252 | 193 |

(continued)

|  | IE1 | IE2 | IE3 | IE4 |
|---|---|---|---|---|
| 180° Peel Adhesion after 24 h (g/25 mm)-PMMA[1] Plates | 168 | 183 | 187 | 173 |
| 180° Peel Adhesion after 24 h (g/25 mm)-Painted[2] Plates | 172 | 183 | 151 | 154 |
| Noise on Unwinding | None | Low | None | None |
| Unwinding Force at High Speed (g/50 mm) | 94 | 238 | 69 | 50 |
| Unwinding Force (g/180 mm at 3 m/min) | 806 | 936 | 868 | 593 |

[1] PMMA plates are polymethyl methacrylate plates.
[2] Painted plates are aluminum painted plates white, RAL9010, thickness 1.5 mm, available from Société ALMET (Carros, France).

Table 6 - Comparative Film Properties

|  | CE1 | CE2 | CE3 |
|---|---|---|---|
| 180° Peel Adhesion after 24 h (g/25 mm) Stainless Steel | 232 | 92 | 240 |
| 180° Peel Adhesion after 24 h (g/25 mm)Glass Plates | 255 | 74 | 249 |
| 180° Peel Adhesion after 24 h (g/25 mm)-PMMA Plates | 120 | - | 135 |
| 180° Peel Adhesion after 24 h (g/25 mm)Painted Plates | 148 | - | 168 |
| Noise on Unwinding | Low | Impossible - film deformed or broke during unwinding | High |
| Unwinding Force at High Speed (g/50 mm) | 593 | 1000 | 741 |
| Unwinding Force (g/180 mm at 3 m/min) | 4155 | Impossible - film deformed or broke during unwinding | 7046 |

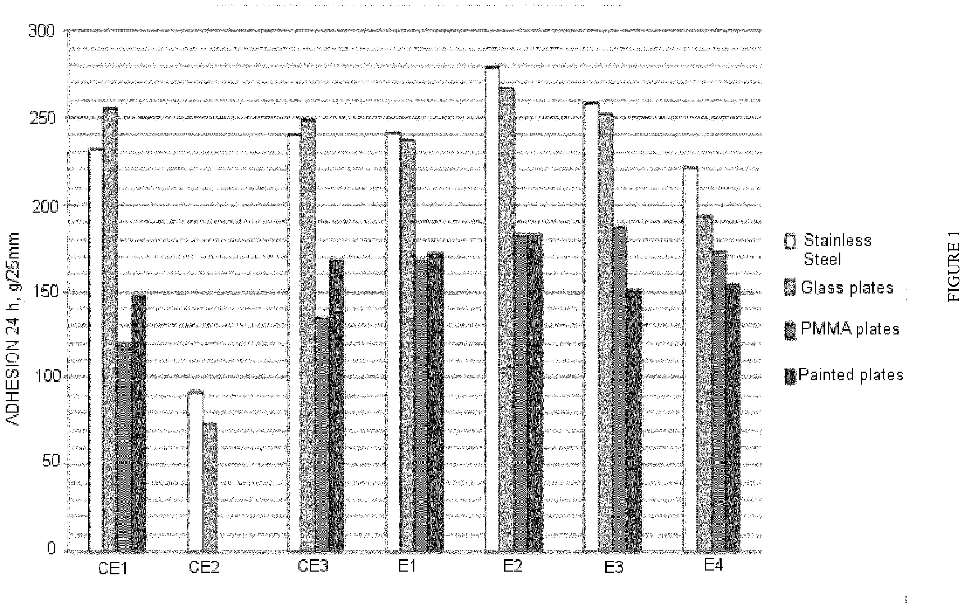

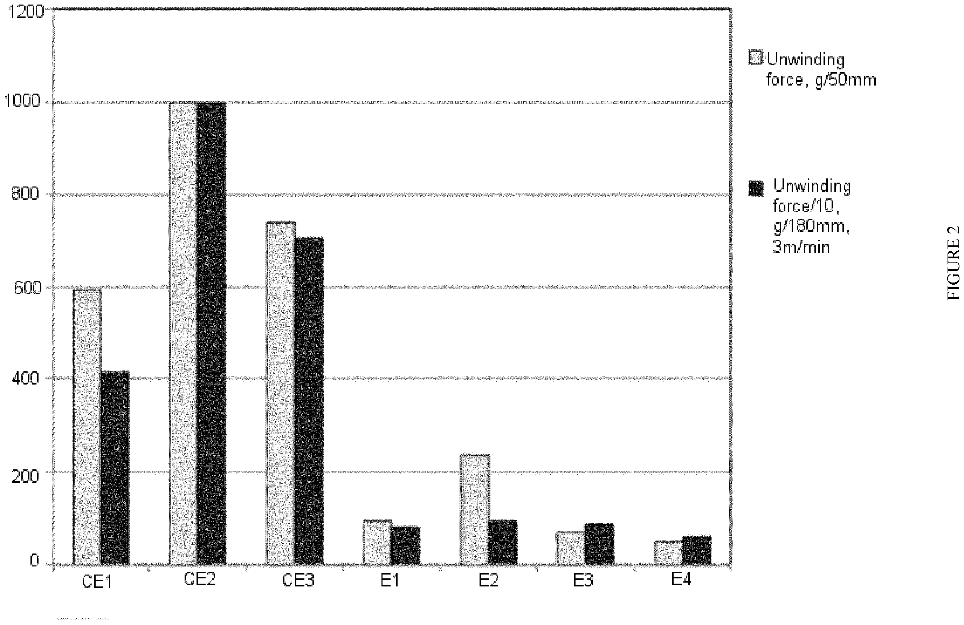

As shown in Tables 5 and 6 and FIGS. 1 and 2, the noise upon unwinding, the unwinding force at high speeds, and the unwinding force at 3 m/min are improved in comparison to the comparative examples 1, 2, and 3. Also, the adhesion levels to various substrates are not adversely affected in comparison to the comparative examples 1, 2, and 3.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

**Claims**

1.   A blend suitable for use in a release layer of a multilayer protective film, the blend comprising:

greater than 50 wt.% of an ethylene/alpha-olefin copolymer;
a functionalized ethylene-based polymer grafted with ethylenically unsaturated carboxylic acids and acid derivatives; and
from 3 to 20 wt.% of an inorganic filler.

2.   The blend of claim 1, wherein the inorganic filler comprises calcium carbonate, talc, silica, mica, or kaolin, or combinations thereof.

3.   The blend of claim 1, wherein the average particle diameter of the inorganic filler is from 0.1 $\mu$m to 100 $\mu$m.

**4.** The blend of claim 1, wherein the functionalized ethylene-based polymer is a maleic anhydride grafted polyethylene.

**5.** The blend of claim 4, wherein the blend comprises from 0.1 to 15 wt.% of the maleic anhydride grafted polyethylene.

**6.** The blend of claim 4, wherein the maleic anhydride is grafted onto the polyethylene in an amount of from 0.01 to 6 wt.% based on the weight of the polyethylene.

**7.** A multilayer film comprising:

an adhesive layer,
a release layer, and
a core layer positioned between the adhesive layer and the release layer;
wherein the release layer comprises the blend of claim 1.

**8.** The film of claim 7, wherein the ethylene/alpha-olefin copolymer has a density of 0.920 to 0.965 g/cc and a melt index, 12, of 0.1 to 5.0 g/10 min (190°C and 2.16 kg), and, optionally, the blend further comprises a low density polyethylene.

**9.** The film of claim 7, wherein the adhesive layer comprises a composition comprising an ethylene/a-olefin block copolymer, a tackifier, and optionally, an oil.

**10.** The film of claim 9, wherein the composition has a melt index (12) from 1 to 50 g/10 min (190°C and 2.16 kg) and an I10/I2 ratio from 7.5 to 13.

**11.** The film of claim 7, wherein the core layer comprises low density polyethylene, linear low density polyethylene, medium density polyethylene, high density polyethylene, polypropylene, or combinations thereof.

**12.** The film of claim 7, wherein the film has an overall thickness of less than 100 $\mu$m.

**Patentansprüche**

**1.** Eine zur Verwendung in einer Trennschicht einer mehrschichtigen Schutzfolie geeignete Mischung, wobei die Mischung Folgendes beinhaltet:

zu mehr als 50 Gew.-% ein Ethylen-alpha-Olefin-Copolymer;
ein funktionalisiertes, mit ethylenisch ungesättigten Carbonsäuren und Säurederivaten gepfropftes Polymer auf Ethylenbasis; und
zu 3 bis 20 Gew.-% einen anorganischen Füllstoff.

**2.** Mischung gemäß Anspruch 1, wobei der anorganische Füllstoff Calciumcarbonat, Talk, Siliciumdioxid, Glimmer oder Kaolin oder Kombinationen davon beinhaltet.

**3.** Mischung gemäß Anspruch 1, wobei der durchschnittliche Partikeldurchmesser des anorganischen Füllstoffs von 0,1 $\mu$m bis 100 $\mu$m beträgt.

**4.** Mischung gemäß Anspruch 1, wobei das funktionalisierte Polymer auf Ethylenbasis ein mit Maleinsäureanhydrid gepfropftes Polyethylen ist.

**5.** Mischung gemäß Anspruch 4, wobei die Mischung zu 0,1 bis 15 Gew.-% das mit Maleinsäureanhydrid gepfropfte Polyethylen beinhaltet.

**6.** Mischung gemäß Anspruch 4, wobei das Maleinsäureanhydrid in einer Menge von 0,01 bis 6 Gew.-%, bezogen auf das Gesamtgewicht des Polyethylens, auf das Polyethylen gepfropft ist.

**7.** Eine mehrschichtige Folie, die Folgendes beinhaltet:

eine Klebschicht,

eine Trennschicht und
eine Kernschicht, die zwischen der Klebschicht und der Trennschicht positioniert ist;
wobei die Trennschicht die Mischung gemäß Anspruch 1 beinhaltet.

8.  Folie gemäß Anspruch 7, wobei das Ethylen-alpha-Olefin-Copolymer eine Dichte von 0,920 bis 0,965 g/cm$^3$ und einen Schmelzindex, I2, von 0,1 bis 5,0 g/10 min (190 °C und 2,16 kg) aufweist und optional die Mischung ferner ein Polyethylen niederer Dichte beinhaltet.

9.  Folie gemäß Anspruch 7, wobei die Klebschicht eine Zusammensetzung beinhaltet, die ein Ethylen-$\alpha$-Olefin-Block-copolymer, einen Klebrigmacher und optional ein Öl beinhaltet.

10. Folie gemäß Anspruch 9, wobei die Zusammensetzung einen Schmelzindex (I2) von 1 bis 50 g/10 min (190 °C und 2,16 kg) und ein I10/I2-Verhältnis von 7,5 bis 13 aufweist.

11. Folie gemäß Anspruch 7, wobei die Kernschicht Polyethylen niederer Dichte, lineares Polyethylen niederer Dichte, Polyethylen mittlerer Dichte, Polyethylen hoher Dichte, Polypropylen oder Kombinationen davon beinhaltet.

12. Folie gemäß Anspruch 7, wobei die Folie eine Gesamtdicke von weniger als 100 $\mu$m aufweist.


**Revendications**

1.  Un mélange homogène convenant pour une utilisation dans une couche antiadhésive d'un film protecteur multicouche, le mélange homogène comprenant :

    plus de 50 % en poids d'un copolymère d'éthylène/alpha-oléfine ;
    un polymère à base d'éthylène fonctionnalisé greffé avec des acides carboxyliques éthyléniquement insaturés et des dérivés d'acides ; et
    de 3 à 20 % en poids d'une charge inorganique.

2.  Le mélange homogène de la revendication 1, où la charge inorganique comprend du carbonate de calcium, du talc, de la silice, du mica, ou du kaolin, ou des combinaisons de ceux-ci.

3.  Le mélange homogène de la revendication 1, où le diamètre moyen des particules de la charge inorganique va de 0,1 $\mu$m à 100 $\mu$m.

4.  Le mélange homogène de la revendication 1, où le polymère à base d'éthylène fonctionnalisé est un polyéthylène greffé anhydride maléique.

5.  Le mélange homogène de la revendication 4, où le mélange homogène comprend de 0,1 à 15 % en poids du polyéthylène greffé anhydride maléique.

6.  Le mélange homogène de la revendication 4, où l'anhydride maléique est greffé sur le polyéthylène dans une quantité allant de 0,01 à 6 % en poids rapporté au poids du polyéthylène.

7.  Un film multicouche comprenant :

    une couche adhésive,
    une couche antiadhésive, et
    une couche de cœur positionnée entre la couche adhésive et la couche antiadhésive ;
    où la couche antiadhésive comprend le mélange homogène de la revendication 1.

8.  Le film de la revendication 7, où le copolymère d'éthylène/alpha-oléfine a une masse volumique de 0,920 à 0,965 g/cm$^3$ et un indice de fluidité à l'état fondu, I2, de 0,1 à 5,0 g/10 min (190 °C et 2,16 kg), et, facultativement, le mélange homogène comprend en outre un polyéthylène basse densité.

9.  Le film de la revendication 7, où la couche adhésive comprend une composition comprenant un copolymère bloc d'éthylène/$\alpha$-oléfine, un tackifiant, et, facultativement, une huile.

**10.** Le film de la revendication 9, où la composition a un indice de fluidité à l'état fondu (I2) allant de 1 à 50 g/10 min (190 °C et 2,16 kg) et un rapport I10/I2 allant de 7,5 à 13.

**11.** Le film de la revendication 7, où la couche de cœur comprend du polyéthylène basse densité, du polyéthylène basse densité linéaire, du polyéthylène moyenne densité, du polyéthylène haute densité, du polypropylène, ou des combinaisons de ceux-ci.

**12.** Le film de la revendication 7, où le film a une épaisseur globale inférieure à 100 $\mu$m.

FIGURE 1

FIGURE 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009158036 A
- US 7498282 B
- WO 9425523 A
- US 5677383 A
- US 5847053 A
- US 6111023 A
- US 4547475 A
- US 5272236 A
- US 5278272 A
- US 6812289 B
- WO 9308221 A
- US 3645992 A
- EP 0129368 A
- EP 0260999 A
- US 4701432 A
- US 4937301 A
- US 4935397 A
- US 5055438 A
- WO 9007526 A

- US 4076698 A
- US 2005718184 A
- US 4599392 A
- US 6960635 B
- US 6525157 B
- US 7608668 B
- US 7858706 B
- US 7893166 B
- US 7947793 B
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig

### Non-patent literature cited in the description

- *Rev. Macromol. Chem. Phys.,* 1989, vol. C29 (2, 3), 285-297
- **ZIMM, B.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112
- **POTEMKIN.** *Physical Review E,* 1998, vol. 57 (6), 6902-6912

- **DOBRYNIN.** *J. Chem.Phvs.,* 1997, vol. 107 (21), 9234-9238
- The Kirk-Othmer, Encyclopedia of Chemical Technology. John Wiley & Sons, 1991, vol. 1, 314-343
- **ZWEIFEL HANS et al.** Plastics Additives Handbook. Hanser Gardner Publications, 2001
- **WILLIAMS ; WARD.** *J. Polym. Sci., Polym. Let.,* 1968, vol. 6, 621